# EUROPÄISCHE PATENTSCHRIFT

(11) **EP 2 390 885 B1**
(45) Veröffentlichungstag und Bekanntmachung des Hinweises auf die Patenterteilung: **09.01.2013**
(21) Anmeldenummer: 10005442.8
(22) Anmeldetag: 26.05.2010
(51) Int. Cl.: H01F 41/12, H01F 27/32, B29C 70/32

(54) **Verfahren zur Herstellung von Wicklungen für einen Trockentransformator**
Method for manufacturing coils for a dry transformer
Procédé de fabrication d'enroulements pour un transformateur sec

(43) Veröffentlichungstag der Anmeldung: 30.11.2011
(73) Patentinhaber: ABB Technology AG, 8050 Zürich (CH)
(72) Erfinder: Weber, Benjamin, 59955 Winterberg (DE); Tepper, Jens, Dr., 59929 Brilon (DE); Cornelius, Frank, 59936 Olsberg (DE); Becker, Oliver, 69198 Schriesheim (DE); Szasz, Paul, Dipl.-ing., 68723 Plankstadt (DE)
(74) Vertreter: Partner, Lothar

(56) Entgegenhaltungen:
- EP-A1- 0 116 367
- EP-A1- 1 211 052
- EP-B1- 1 941 523
- WO-A1-93/23461
- DE-A1- 4 445 423
- US-A1- 2009 313 812

## Beschreibung

Die Erfindung betrifft ein Verfahren zur Herstellung von Wicklungen für einen Trockentransformator gemäß Anspruch 1.

Trockentransformatoren sind an sich bekannt. Bei dieser Art von Transformator wird die im Betrieb auftretende Verlustwärme unmittelbar an die Umgebungsluft abgegeben im Unterschied zu sogenannten Öltransformatoren, bei welchen die Transformatorspulen in einem mit Isolieröl gefüllten Behälter angeordnet sind und das Isolieröl die zusätzliche Funktion als Wärmeträger übernimmt und die Verlustwärme an die häufig gerippte, mit der Umgebungsluft in Verbindung stehende Behälterwand überträgt.

Ein weiterer Unterschied, die Isolation zwischen den einzelnen Wicklungslagen jeder Spule betreffend, besteht darin, dass bei den Trockentransformatoren der die Öltransformatoren gegen Einwirkungen von außen schützende Blechmantel entfällt. Demgemäss müssen die Spulen der Trockentransformatoren beziehungsweise deren Oberfläche einen vergleichbaren Schutz aufweisen, ohne dass die Wärmeabfuhr hierdurch wesentlich beeinträchtigt ist.

Um den vorstehenden Anforderungen zu entsprechen, können die Wicklungen der Spulen von Trockentransformatoren bekannterweise mit kunstharzgetränkten Faserrovings, vorzugsweise aus Glasfasern, umwickelt werden.

Dabei werden diese Faserrovings jeweils lagenweise aufgebracht und dienen so auch zur Isolation der einzelnen Wicklungslagen untereinander. Das Aufbringen der einzelnen Drahtlagen und der Isolierlagen erfolgt im allgemeinen mit Hilfe sogenannter Wickelvorrichtungen, die ähnlich wie eine Drehbank gestaltet sind, wobei der spätere Spulenkörper zwischen einem Spindelstock und einem Reitstock eingespannt ist und der Wicklungsdraht und die Faserrovings jeweils von der Seite über einen supportähnlichen Führungsschlitten zugeführt werden.

Um während der Fertigung einer solchen Spule die vorgegebene Gestaltung sowie die Abmessungen der Wicklung einzuhalten sowie um einen unkontrollierten Abfluß von Kunstharz zu verhindern, erfolgt die Trocknung und Aushärtung der fertiggewickelten Spule üblicherweise unter Rotation in einem speziellen Härtungsofen.

Um eine möglichst gleichmäßige Ausbildung des elektromagnetischen Feldes der einzelnen Spulen zu erreichen, werden die Oberspannungswicklungen der Transformatorspulen vorzugsweise in Form sogenannter Gruppenwicklungen aufgebaut. Dabei sind die Wicklungslagen in bezug auf die gesamte Spulenlänge aufgeteilt in mehrere nebeneinander befindliche Gruppen, die jedoch elektrisch miteinander in Serie geschaltet sind. Dies wiederum erfordert beim Aufbau der einzelnen Wicklungslagen jeweils eine Auftrennung der Wicklung, das heißt das Abschneiden des dieser Lage zugeordneten Wicklungsdrahtes, und nach erfolgtem Aufbringen der jeweiligen zugeordneten Isolierlage die galvanische Verbindung der Drahtenden miteinander, was üblicherweise mittels Lötverbindung erfolgt.

Diese Prozedur ist sehr zeitaufwendig und personalintensiv. Sie erfordert darüber hinaus eine erhöhte Aufmerksamkeit der hiermit befassten Person.

Aus der EP1941523B1 ist ein Verfahren zum Herstellen einer harzisolierten Spule bekannt, wobei die Spule mit Fasern verstärkt ist, die auf der Spule in einer massiven Polymermatrix angeordnet sind. Hierbei sind eine Wicklungsschicht und eine Faser-Polymer-Schicht abwechselnd und wiederholt aufgebracht, wobei das Aufbringen der

Faser-Polymer-Schicht die nachfolgend angegebenen kontinuierlich ausgeführten Schritte umfasst:
- kontinuierliches Zuführen mindestens eines Bandes, das Fasern und eine massive Polymermatrix umfasst,
- Verschmelzen oder Aktivieren einer Sektion des mindestens einen Bandes während des Zuführens,
- Pressen der verschmolzenen oder aktivierten Sektion des Bandes auf die Spule während des Zuführens und
- Abkühlen des Bandes nach dem Verlassen der erhitzten oder aktivierten und gepressten Zone.

Ferner ist aus der DE 4445423 A1 , die als nächstliegender Stand der Technik angesehen wird, ein Verfahren bekannt geworden, gemäß welchem vor dem Aufbringen der Unterspannungs-Wicklung die für die Lagenisolierung maximal erforderliche Isolierdicke und die dieser Isolierdicke entsprechende Anzahl von Faserrovings bestimmt wird. Dabei erfolgt die Herstellung jeder Wicklungslage und der zugehörigen Isolierlage gleichzeitig mit räumlichem Versatz zueinander, wobei die Einstellung der erforderlichen Isolierdicke einerseits über den Wickelvorschub der Faserrovings und andererseits über deren Anzahl erfolgt.

Kennzeichnend für das zuletzt angegebene Verfahren ist, dass die Faserrovings von der einen Seite und der Wicklungsdraht von der gegenüberliegenden Seite, das heißt von unterschiedlichen Seiten, der Wickelvorrichtung zugeführt werden. Hierin wird als Vorteil gesehen, dass sich die Rovings und der Draht nicht behindern, zum Beispiel bei unterschiedlichem Vorschub. Allerdings entsteht bei dieser Verfahrensweise ein erheblicher Raumbedarf.

Ausgehend von dem vorstehend aufgezeigten Stand der Technik ist es Aufgabe der Erfindung, ein Verfahren der eingangs genannten Art anzugeben, das einfach durchführbar ist, möglichst geringen Raumbedarf hat und die aufgezeigten Schwierigkeiten vermeidet.

Diese Aufgabe wird erfindungsgemäß durch die kennzeichnenden Merkmale des Anspruchs gelöst.

Demgemäß ist entsprechend der kennzeichnenden Merkmale von Anspruch 1 erfindungsgemäß vorgesehen, dass zur Herstellung der Wicklung zwischen den einzelnen Wicklungslagen der Wicklung abwechselnd und wiederholt aus Fasern und einer massiven Polymermatrix gebildete Faser-Polymer-Schichten, sogenannte Prepregs, als Isolationsschichten gleichzeitig mit dem Wicklungsleiter aufgebracht werden, dass hierbei diese Isolationsschichten während des Aufbringens erwärmt werden durch Beheizung des Wicklungsleiters infolge dessen ohmschen Widerstandes und dass nach deren Aufbringen auf die einzelnen Wicklungslagen die fertiggestellte Wicklung einem Aushärtungsvorgang unterzogen wird , so dass die auf die Wicklung aufgebrachten Isolationsschichten ausgehärtet werden.

Der wesentliche Vorteil der Erfindung ist darin zu sehen, dass auf die beim bisherigen Bau von Trockentransformatoren verwendeten kunstharzgetränkten Faserrovings als Isolationsschicht verzichtet wird zugunsten der Verwendung von vorbehandelten Endlosfasern, die als Prepreg, das sind mit Kunstharz auf Polymerbasis imprägnierte Endlosfaserbündel, in der Fachwelt bekannt sind.

Als Prepreg wird ein Halbzeug bezeichnet, das aus Endlosfasern und aus einer thermoplastischen oder aus einer ungehärteten duroplastischen Kunststoffmatrix gebildet ist und das vielfach Anwendung findet, zum Beispiel im Leichtbau für Fluggeräte und Kraftfahrzeuge. Die Endlosfasern können hierbei als reine unidirektionale Schicht, als Gewebe oder als Gelege vorliegen. Im Allgemeinen wird Prepreg bahnförmig geliefert, vorzugsweise auf Rollen gewickelt.

Prepregs sind maschinell verarbeitbar und werden daher hauptsächlich in automatisierten Prozessen eingesetzt. Sie ergeben eine gleichmäßige und hohe Qualität. Vorteile sind ihre niedrige Ondulation und ihr hoher Faservolumenanteil. Unter Ondulation ist hierbei die Umlenkung von Fasern innerhalb von Geweben, zum Beispiel bei Faserverbundwerkstoffen zu verstehen. Ondulation führt zu einer Abnahme der faserparallelen Festigkeit des Gewebes.

Durch die Aushärtung der Prepregs unter hohen Temperaturen sind kurze Taktzeiten möglich. Die Verarbeitung der Prepregs erfordert allerdings einen hohen Investitionsaufwand zum Beispiel für Autoklaven, Legeroboter sowie gekühlte Lagerhaltung.

Im Falle der Erfindung, nämlich bei der Verwendung von Prepregs als Isoliermaterial für die Herstellung von Isolierschichten, ist der Aufwand im Vergleich zur bisherigen Fertigung mit Verwendung üblicher kunstharzgetränkter Faserrovings deutlich geringer, wie nachfolgend erläutert wird.

So ist gemäß einem beispielhaften Verfahren ein UV-härtbares Harz als Teil der Faser-Polymer-Schicht vorgesehen, wobei während des Aufbringens ein Bestrahlen der Wicklung mit UV-Licht erfolgt, was zunächst eine Aktivierung der Härtungsreaktion des Harzes während des Wickelvorgangs zur Folge hat und dann zu einer Teil- oder Vollaushärtung der Wicklung führt.

Das Herstellen der Spulenwicklung lässt sich problemlos unter Verwendung von Prepregs mit den für Faserrovings vorgesehenen Einrichtungen durchführen, wobei ein Tränken mit flüssigem Kunstharz entfällt, weil die Prepregs bereits mit der für den Zusammenhalt der Windungen beziehungsweise für die ausreichende Isolierung vorgesehenen Kunststoffmatrix auf Polymerbasis imprägniert angeliefert werden.

Dementsprechend bedarf es lediglich der Zufuhr einer gewissen Menge an Energie in Form von Wärme, welche die in den Faserbündeln des Prepregs gebundene Polymermatrix erweichen lässt, so dass die einzelnen aus Prepregs gebildeten Lagen der Isolierung sich plastisch verformen lassen und sich miteinander zu einem einzigen Körper vereinigen, der nach der durch die Erwärmung verursachten anschließenden Aushärtung infolge der Abkühlung ausreichende mechanische Steifigkeit und Festigkeit erhält.

Ein weiteres beispielhaftes Verfahren sieht vor, dass zur Erwärmung der Isolationsschichten während des Aufbringens ein Anstrahlen der Spulenoberfläche und/oder des Isolationsmaterials mit einem Infrarot-Strahler oder Anblasen mit Heißluft erfolgt, was zunächst eine Erweichung des Harzes während des Wickelvorgangs zur Folge hat und dann zu einer Teil- oder Vollaushärtung der Wicklung führt.

Für die Anwendung dieses beispielhaften Verfahrens ist es nicht erforderlich UV-härtbares Harz als Teil der Faser-Polymer-Schicht vorzusehen.

Schließlich kann gemäß eines beispielshaften Verfahrens die Erwärmung der Isolationsschichten während des Aufbringens durch die Verwendung einer beheizten Andruckrolle beim Wickeln vorgesehen sein, was zunächst eine Erweichung des Harzes während des Wickelvorgangs zur Folge hat und dann zu einer Teil- oder Vollaushärtung der Wicklung führt.

Bei dem erfindungsgemäßen Verfahren zur Herstellung einer Wicklung für einen Trockentransformator ist eine indirekte Beheizung der Wicklung vorgesehen derart, dass zur Erwärmung der Isolationsschichten während des Aufbringens die Beheizung des Wicklungsleiters infolge dessen ohmschen Widerstandes erfolgt, was zunächst eine Erweichung des Harzes während des Wickelvorgangs zur Folge hat und dann zu einer Teil- oder Vollaushärtung der Wicklung führt.

Hierbei ist bei einer Ausführungsvariante des erfindungsgemäßen Verfahrens vorgesehen, dass am Anfang des auf die Spule aufgewickelten Leiters und an dessen Ende jeweils über Schleifringe in den Leiter ein Strom geschickt wird, das heißt, beide Leiterenden werden mit einer elektrischen Stromquelle verbunden und dienen als Widerstandsheizung, welche den Leiter infolge Stromdurchfluss erwärmt und damit auch die dem Leiter benachbarten Isolierschichten. Diese Härtungsmethode kann bei Vermeidung der Rotation während der Härtung auch ohne den Einsatz von Schleifringen erfolgen. Alternativ kann die Spule nur innerhalb eines eingeschränkten Winkelbereichs, zum Beispiel +/- 180°, alternierend gedreht werden, um Schleifringe zu vermeiden.

Ein weiterer Aspekt der Erfindung betrifft die Auswirkungen des Aufbaues der Wicklungslagen beziehungsweise der Isolierschichten auf das Verhalten des elektrischen Feldes und dabei dessen Optimierung, die durch entsprechenden Wicklungsaufbau erreicht wird.

Dementsprechend ist gemäß einer Ausführungsform des erfindungsgemäßen Verfahrens vorgesehen, dass die Isolationschichten zwischen den einzelnen Wicklungslagen stufenförmig aufgebaut werden derart, dass sich die Isolationsschichten zwischen der ersten und zweiten Lage und die zwischen der zweiten und der dritten Lage in der Querschnittsansicht zu einem Rechteck ergänzen.

Eine alternative Ausführungsvariante des erfindungsgemäßen Verfahrens ist dadurch gekennzeichnet, dass durch kontinuierliche Veränderung der Geschwindigkeit des Isolationsvorschubs eine stufenlos linear ansteigende Isolation erreicht wird, wobei sich die Isolationsschichten zwischen der ersten und zweiten Lage einerseits und die zwischen der zweiten und der dritten Lage andererseits in der Querschnittsansicht zu einem Rechteck ergänzen.

Ferner ist gemäß einer weiteren Alternative des erfindungsgemäßen Verfahrens vorgesehen, dass durch Veränderungen der Geschwindigkeit des Isolationsvorschubs eine nicht-linear ansteigende Dicke der Isolationsschicht resultiert, bei der sich die Isolationen zwischen der ersten und zweiten Lage und die zwischen der zweiten und der dritten Lage in der Querschnittsansicht zu einem Rechteck ergänzen.

Schließlich kann gemäß einer weiteren Variante des erfindungsgemäßen Verfahrens vorgesehen sein, dass die Isolationsschichten zwischen zwei benachbarten Lagen derart gestaltet sind, dass sie sich nicht zu einem Rechteck ergänzen, so dass die äußerste Oberfläche der Wicklung nicht parallel zur inneren Oberfläche verläuft.

Eine nach dem zuvor behandelten und ausführlich erläuterten Verfahren hergestellte Wicklung ist einfach aufgebaut , besitzt eine funktionell einwandfreie Isolierung ist, zuverlässig im Betrieb und weist ausreichende mechanische Festigkeit auf.

Zwischen den einzelnen Wicklungslagen der Wicklung sind abwechselnd und wiederholt Faser-Polymer-Schichten als Isolationsschichten vorgesehen, die aus Prepregs, das sind mit einer massiven Polymermatrix verbundene Faserbündel, gebildet sind, wobei diese Isolationsschichten miteinander verbunden sind.

Hierbei ist die angestrebte hohe mechanische Festigkeit der Wicklung dadurch erreicht, dass die zum Einsatz vorgesehenen Faser-Polymer-Schichten in Form von Prepregs zum Einsatz kommen, wobei der Polymeranteil deren massiver Polymermatrix ausgehärtet ist und hierdurch die Faser beziehungsweise Faserbündel in der Polymermatrix verankert.

## Patentansprüche

1. Verfahren zur Herstellung von Wicklungen für einen Trockentransformator mit jeweils einer Wicklung für die Unterspannung (US-Wicklung) und für die Oberspannung (OS-Wicklung), die jeweils gegeneinander sowie lagenweise untereinander elektrisch isoliert sind, indem zunächst die Wicklung für die Unterspannung aus elektrisch leitendem Draht- oder Bandmaterial hergestellt und mit einer Isolationsschicht aus harzgetränktem Fasermaterial, so genannten Rovings, umwickelt wird, worauf dann die Wicklung für die Oberspannung aufgebaut wird, deren einzelne Lagen jeweils mittels harzgetränkter Faserrovings gegeneinander isoliert werden, wobei vor dem Aufbringen der OS-Wicklung die für die Lagenisolierung maximal erforderliche Isolierdicke und die dieser Isolierdicke entsprechende Anzahl von Faserrovings bestimmt wird, wobei ferner die Herstellung jeder Wicklungslage und der zugehörigen Isolierlage gleichzeitig mit räumlichem Versatz zueinander erfolgt und die Einstellung der erforderlichen Isolierdicke sowohl über die Anzahl der Faserrovings als auch über den Wickelvorschub der Faserrovings erfolgt,
**dadurch gekennzeichnet, dass**
zur Herstellung der Wicklung zwischen den einzelnen Wicklungslagen der Wicklung abwechselnd und wiederholt aus Fasern und einer massiven Polymermatrix gebildete Faser-Polymer-Schichten, so genannte Prepregs, als Isolationsschichten gleichzeitig mit dem Wicklungsleiter aufgebracht werden, dass nach deren Aufbringen auf die einzelnen Wicklungslagen die fertig gestellte Wicklung einem Aushärtungsvorgang unterzogen wird, so dass die auf die Wicklung aufgebrachten Prepregs ausgehärtet werden und dass zur Erwärmung der Isolationsschichten während des Aufbringens die Beheizung des Wicklungsleiters infolge dessen ohmschen Widerstandes erfolgt was zunächst eine Erweichung des Harzes während des Wickelvorgangs zur Folge hat und dann zu einer Teil- oder Vollaushärtung der Wicklung führt.

2. Verfahren nach Anspruch 1, **dadurch gekennzeichnet, dass** bei rotierender Wicklung am Anfang des auf die Spule aufgewickelten Leiters und an dessen Ende jeweils über Schleifringe in den Leiter ein Strom geschickt wird.

3. Verfahren nach Anspruch 1, **dadurch gekennzeichnet, dass** bei nicht rotierender Wicklung am Anfang des auf die Spule aufgewickelten Leiters und an dessen Ende in den Leiter ein Strom geschickt wird.

4. Verfahren nach Anspruch 1, **dadurch gekennzeichnet, dass** bei alternierend eingeschränkt rotierender Wicklung am Anfang des auf die Spule aufgewickelten Leiters und an dessen Ende in den Leiter ein Strom geschickt wird.

5. Verfahren nach einem der vorherigen Ansprüche, **dadurch gekennzeichnet, dass** die Isolationsschichten zwischen den einzelnen Wicklungen eine konstante Dicke aufweisen.

6. Verfahren nach einem der vorherigen Ansprüche, **dadurch gekennzeichnet, dass** die Isolationsschichten zwischen den einzelnen Wicklungslagen stufenförmig aufgebaut werden, wobei sich die Isolationsschichten zwischen der ersten und zweiten Lage und die zwischen der zweiten und der dritten Lage in der Querschnittsansicht zu einem Rechteck ergänzen.

7. Verfahren nach einem der Ansprüche 1 *oder* 2, **dadurch gekennzeichnet, dass** durch kontinuierliche Veränderung der Geschwindigkeit des Isolationsvorschubs eine stufenlos linear ansteigende Isolation erreicht wird, bei der sich die Isolationen zwischen der ersten und zweiten Lage und die zwischen der zweiten und der dritten Lage in der Querschnittsansicht zu einem Rechteck ergänzen.

8. Verfahren nach einem der Ansprüche 1 *oder* 2, **dadurch gekennzeichnet, dass** durch Veränderung der Geschwindigkeit des Isolationsvorschubs eine nicht-linear ansteigende Isolation erreicht wird, bei der sich die Isolationen zwischen der ersten und zweiten Lage und die zwischen der zweiten und der dritten Lage in der Querschnittsansicht zu einem Rechteck ergänzen.

9. Verfahren nach einem der Ansprüche 3 *bis* 5, **dadurch gekennzeichnet, dass** die Isolationsschichten zwischen zwei benachbarten Lagen sich nicht zu einem Rechteck ergänzen, so dass die äußerste Oberfläche der Wicklung nicht mehr parallel zur inneren Oberfläche verläuft.

## Claims

1. Method for producing windings for a dry-type transformer with in each case one winding for the low voltage (LV winding) and one for the high voltage (HV winding), which are each electrically insulated from one another and whose layers are electrically insulated from one another by virtue of, initially, the winding for the low voltage being produced from electrically conductive wire or tape material and an insulating layer consisting of resin-impregnated fibre material, so-called rovings, being wound around said winding, with the winding for the high voltage then being formed on top of said winding, with the individual layers of the winding for the high voltage each being insulated from one another by means of resin-impregnated fibre rovings, wherein, prior to the application of the HV winding, the maximum insulating thickness required for the layer insulation and the number of fibre rovings corresponding to this insulating thickness is determined, wherein, in addition, each winding layer and the associated insulating layer are produced simultaneously with a physical offset with respect to one another and the required insulating thickness is set both via the number of fibre rovings and via the winding feed of the fibre rovings,
**characterized in that**
in order to produce the winding, fibre polymer layers, so-called prepegs, formed from fibres and a solid polymer matrix are applied alternately and repeatedly, as layers of insulation, simultaneously with the winding conductor between the individual winding layers of the winding, **in that**, once said fibre/polymer layers have been applied to the individual winding layers, the finished winding is subjected to a curing operation, such that the prepregs applied to the winding are cured, and **in that**, in order to heat the layers of insulation during the application, heating of the winding conductor takes place as a result of the nonreactive resistance thereof, which initially results in softening of the resin during the winding operation and then results in partial or complete curing of the winding.

2. Method according to Claim 1, **characterized in that**, as the winding rotates, a current is sent into the conductor which has been wound onto the coil in each case via sliprings at the start of the conductor and at the end thereof.

3. Method according to Claim 1, **characterized in that**, when the winding is not rotating, a current is sent into the conductor which has been wound onto the coil at the start of the conductor and at the end thereof.

4. Method according to Claim 1, **characterized in that**, when the winding is rotating alternately in restricted fashion, a current is sent into the conductor which has been wound onto the coil at the start of the conductor and at the end thereof.

5. Method according to one of the preceding claims, **characterized in that** the layers of insulation between the individual windings have a constant thickness.

6. Method according to one of the preceding claims, **characterized in that** the layers of insulation are formed stepwise between the individual winding layers, wherein the layers of insulation between the first and second layers and those between the second and third layers supplement one another in the cross-sectional view to form a rectangle.

7. Method according to either of Claims 1 and 2, **characterized in that**, by continuously varying the speed of the insulation feed, continuously linearly increasing insulation is achieved, in which the insulation between the first and second layers and that between the second and third layers supplement one another in the cross-sectional view to form a rectangle.

8. Method according to either of Claims 1 and 2, **characterized in that**, by varying the speed of the insulation feed, nonlinearly increasing insulation is achieved, in which the insulation between the first and second layers and that between the second and third layers supplement one another in the cross-sectional view to form a rectangle.

9. Method according to one of Claims 3 to 5, **characterized in that** the layers of insulation between two adjacent layers do not supplement one another to form a rectangle, with the result that the outermost surface of the winding no longer runs parallel to the inner surface.

## Revendications

1. Procédé de formation de bobinages pour un transformateur à sec,
à savoir un bobinage pour les sous-tensions (bobinage US) et un bobinage pour les surtensions (bobinage OS) isolés électriquement l'un de l'autre et d'une couche à l'autre,
en formant d'abord avec un matériau électriquement conducteur en fil ou en ruban le bobinage pour les sous-tensions et en y bobinant une couche isolante constituée d'un matériau fibreux imprégné de résine, appelé mèche,
le bobinage pour les surtensions étant formé ensuite et ses différentes couches étant toutes isolées les unes des autres au moyen de mèches de fibres imprégnées de résine,
l'épaisseur maximale nécessaire de l'isolation entre couches et le nombre de mèches de fibres qui correspond à cette épaisseur d'isolation étant déterminés avant le placement du bobinage OS, l'établissement de chaque couche de bobinage et de la couche isolante associée s'effectuant à la fois par l'intermédiaire du nombre des mèches de fibres et du pas d'avancement de l'enroulement des mèches de fibres, **caractérisé en ce que**
pour former le bobinage, des couches de fibres et de polymère formées de fibres et d'une matrice polymère massive, appelées pré-imprégnés, qui servent de couches isolantes, sont placées en alternance de manière répétée entre des différentes couches du bobinage en même temps que les conducteurs du bobinage,
**en ce qu'**après l'application de ces couches sur les différentes couches du bobinage, le bobinage terminé subit une opération de durcissement de telle sorte que les pré-imprégnés appliqués sur le bobinage durcissent et
**en ce que** pour chauffer les couches isolantes pendant l'application, on chauffe le conducteur du bobinage en recourant à sa résistance ohmique, ce qui a d'abord pour conséquence un amollissement de la résine pendant l'opération d'enroulement et entraîne ensuite un durcissement partiel ou complet du bobinage.

2. Procédé selon la revendication 1, **caractérisé en ce que** lorsque le bobinage tourne, un courant est appliqué dans le conducteur par l'intermédiaire de bagues coulissantes prévues respectivement au début du conducteur enroulé en bobines et à son extrémité.

3. Procédé selon la revendication 1, **caractérisé en ce que** lorsque le bobinage ne tourne pas, un courant est appliqué dans le conducteur au début du conducteur enroulé en bobine et à son extrémité.

4. Procédé selon la revendication 1, **caractérisé en ce que** lorsque l'enroulement tourne de manière limitée et en va-et-vient, un courant est appliqué dans le conducteur au début du conducteur enroulé en bobine et à son extrémité.

5. Procédé selon l'une des revendications précédentes, **caractérisé en ce que** les couches isolantes disposées entre les différents enroulements présentent une épaisseur constante.

6. Procédé selon l'une des revendications précédentes, **caractérisé en ce que** les couches isolantes sont formées en gradins entre les différentes couches d'enroulement, les couches isolantes situées entre la première et la deuxième couche et celles situées entre la deuxième et la troisième couche formant en coupe transversale un rectangle.

7. Procédé selon l'une des revendications 1 ou 2, **caractérisé en ce que** par modification continue de la vitesse du pas d'avancement de l'isolation, on obtient une isolation qui augmente de manière linéaire et progressive, les isolations entre la première et la deuxième couche et les isolations entre la deuxième et la troisième couche formant un rectangle en coupe transversale.

8. Procédé selon l'une des revendications 1 ou 2, **caractérisé en ce que** par modification continue de la vitesse du pas d'avancement de l'isolation, on obtient une isolation qui augmente de manière non linéaire et dans laquelle les isolations entre la première et la deuxième couche et les isolations entre la deuxième et la troisième couche forment un rectangle en coupe transversale.

9. Procédé selon l'une des revendications 3 à 5, **caractérisé en ce que** les couches d'isolation situées entre deux couches voisines ne forment pas un rectangle, de sorte que la surface extérieure du bobinage n'est plus parallèle à sa surface intérieure.
